Europäisches Patentamt

European Patent Office

Office européen des brevets

(11) Publication number: **0 264 140**
**A2**

# EUROPEAN PATENT APPLICATION

(21) Application number: **87115194.0**

(22) Date of filing: **16.10.87**

(51) Int. Cl.⁴ **E05B 1/00 , B29C 67/18**

(30) Priority: **17.10.86 JP 159697/86**

(43) Date of publication of application:
**20.04.88 Bulletin 88/16**

(84) Designated Contracting States:
**DE FR GB**

(71) Applicant: **AISIN SEIKI KABUSHIKI KAISHA**
**2-1, Asahi-machi**
**Kariya-shi Aichi-ken(JP)**

(72) Inventor: **Inagaki, Akio**
**14 Toriyama Shimasaka-cho**
**Okazaki City Aichi Pref.(JP)**
Inventor: **Shimomura, Masuo**
**8-1 Sanbongi Ohdaka-cho Midori-ku**
**Nagoya City Aichi Pref.(JP)**

(74) Representative: **Struif, Bernward, Dipl.-Chem.**
**Dr. et al**
**Patentanwaltsbüro Tiedtke, Bühling, Kinne**
**Grupe, Pellmann, Grams, Struif Bavariaring 4**
**D-8000 München 2(DE)**

(54) **An outer door handle.**

(57) It is disclosed an outer door handle comprising a casing and a handle member wherein either of said casing 11 and said handle member 12 includes a base portion 14, 20 made of thermoplastic material including an amount of glass fiber and a thin film 13, 21 laminated on said base portion.

FIG. 1

## AN OUTER DOOR HANDLE

The present invention relates to an outer door handle, and more particularly to an outer door handle which is made of thermoplastic material.

Thermoplastic material, as raw material for conventional outer door handles, includes an amount of glass fiber so as to increase the mechanical strength of the handle. Since glass fiber has the tendency to rise to an outer surface of the handle, the outer surface of the handle has to be formed in such a way that fine unevenness is provided during formation of the handle in order to improve optical appearance. However, the conventional outer door handle has the drawback that the outer surface of the handle is lusterless or dull.

It is an object of the present invention to provide an outer door handle having a glossy outer surface.

According to the invention the outer door handle comprises a casing 11 and a handle member 12 wherein either of said casing 11 and said handle member 12 includes a base portion 14, 20 made of thermoplastic material containing an amount of glass fiber and a thin film 13, 21 laminated on said base portion.

Preferably, the thermoplastic material is a polycarbonate resin. The glass fiber is included in said thermoplastic material at an amount of 5 to 20 %, especially 10 % by weight. The thin film is made of polycarbonate resin and has a thickness of 100 to 300 $\mu$m, especially 200 $\mu$m.

The outer door handle can be produced by pouring the thermoplastic material including an amount of glass fiber into a mold in which a colored thin film made of thermoplastic material has been set previously. In this way the thin film is laminated on said base portion during injection molding thereof.

After such injection molding, the resulting outer door handle has an outer surface covered with said colored film and the other portion has mechanical strength. By replacing the colored thin film, various types of handles may be obtained.

The object mentioned above and other objects, features and advantages of the present invention will become more apparent from the following description when considered in connection with the accompanying drawings in which the preferred embodiment of the present invention is shown by way of an illustrative example.

Figure 1 is a partially cross sectional view of an outer door handle according to an embodiment of the present invention,

Figure 2 is a cross sectional view of a mold before injection, and

Figure 3 is a cross sectional view after injection.

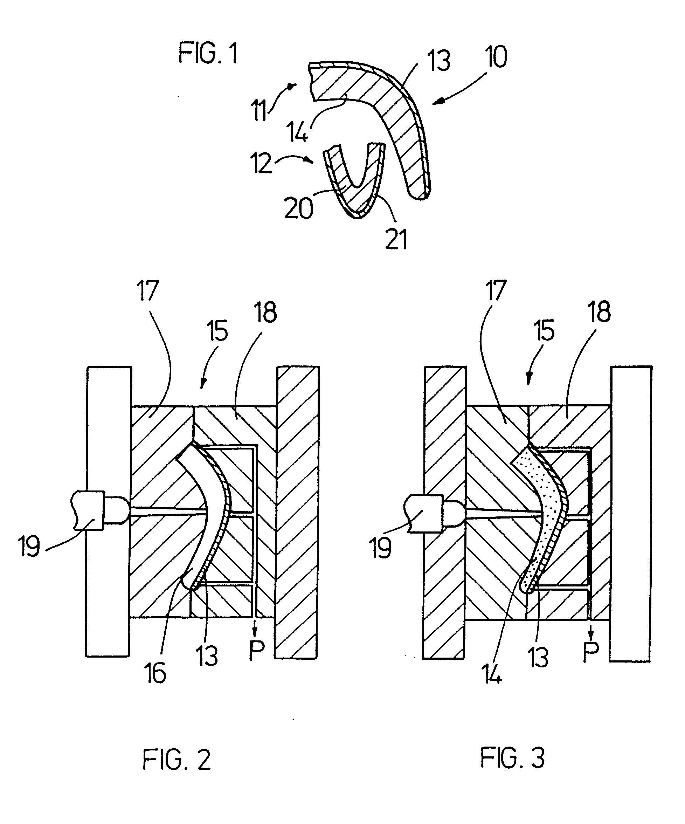

Referring now to Figure 1, as well known, an outer door handle 10 including a casing 11 and a handle member 12 is shown. The casing 11 is formed by laminating a black-colored thin film 13 made of polycarbonate resin having a thickness of 200 m onto a base portion 14 made of polycarbonate resin including 10 % by weight of glass fiber.

For forming the casing 11, an injection molding method is employed. In detail, as seen from Figure 2, a mold 15 has a cavity 16 therein and can be divided into two sections 17 and 18 in the horizontal direction. First, the thin film 13 is set on the section 18. For preventing a relative movement of the thin film 13 to the section 18, the thin film 13 is attracted by the suction of a vacuum pump P. Thereafter, polycarbonate resin including 10 % by weight of glass fiber is injected from an injector 19 into the cavity 16 for a time during which the vacuum pump P operates. After such injection, the base portion 14 with the colored thin film 13 is formed integrally so that the aforementioned casing is obtained.

The handle 12 having a base portion 20 and a thin film 21 laminated thereon may also be formed in a similar way. By changing color or design of the thin film 13 (21), various types of the outer door handle may be obtained. It is noted that specific patterns or symbols may be printed previously onto the thin film 13 and/or 21.

**EXAMPLE** A handle member 12 was produced according to the present invention as described with respect to fig. 2. For comparison, some handle members were produced by the same injection process using different thermoplastic materials with and without glass fiber with the exception that no thin film 13 was set on section 18. The composition of the used materials and the evaluation of roughness, appearance and the mechanical strength of the handle member is shown in the following table:

0 264 140

| evaluation material | Roughness of the outer surface ($\mu$Rz) | Appearance | Mechanical strength (pressure resistance) |
|---|---|---|---|
| polycarbonate resin (no glass fiber is included) | less than 3 | good | 100 kg |
| polycarbonate resin (including 10 wt. % of glass fiber) | 1 to 3 | bad (Glass fiber is raised to the surface of the handle) | 150 kg |
| embodiment of the present invention | less than 1 | very good | 150 kg |
| polyacetate resin (no glass fiber is included) | less than 3 | not so good (Undulation is formed on the surface of the handle) | 115 kg |
| 66 nylon resin (including 30 wt. % of glass fiber) | 1 to 10 | very bad (lusterless/ Glass fiber is raised to the surface of the handle.) | 125 kg |

It is disclosed an outer door handle comprising a casing and a handle member wherein either of said casing 11 and said handle member 12 includes a base portion 14, 20 made of thermoplastic material including an amount of glass fiber and a thin film 13, 21 laminated on said base portion.

3

## Claims

1. An outer door handle comprising:

a casing and a handle member wherein either of said casing 11 and said handle member 12 includes a base portion 14, 20 made of thermoplastic material including an amount of glass fiber and a thin film 13, 21 laminated on said base portion.

2. An outer door handle according to claim 1, wherein said thermoplastic material is polycarbonate resin.

3. An outer door handle according to claim 1, wherein said glass fiber is included in said thermoplastic material at an amount of 5 to 20 %, especially 10 % by weight.

4. An outer door handle according to claim 1, wherein said thin film 13, 21 is made of polycarbonate resin.

5. An outer door handle according to claim 4, wherein said thin film 13, 21 has a thickness of 100 to 300 $\mu$m, especially 200 $\mu$m.

6. An outer door handle according to claim 1 wherein said thin film 13, 21 is laminated on said base portion 14, 20 during injection molding thereof.

7. Process according to claims 1 to 6 wherein said thermoplastic material including an amount of glass fiber is poured into a mold in which a colored thin film made of thermoplastic material has been set previously.

FIG. 1

FIG. 2

FIG. 3